# EUROPEAN PATENT APPLICATION

(11) **EP 1 207 606 A1**
(43) Date of publication of application: **22.05.2002**
(21) Application number: 01610118.0
(22) Date of filing: 20.11.2001
(51) Int. Cl.: H02G 3/30, H02G 1/00

(54) **A method of providing an installation duct and a construction set for performing the method**

(30) Priority: 20.11.2000 DK 200001739
(71) Applicant: LK A/S, DK-2750 Ballerup (DK)
(72) Inventor: Madsen, Kaj Fischer, 2950 Vedbaek (DK)
(74) Representative: Wittrup, Flemming

(57) **Abstract**

A method of providing an installation duct in a lightweight partition wall comprising studs (1 and 2) comprises arranging duct connecting members (6, 7) on at least some of the studs, and then inserting duct spacers (8) between the duct connecting members (6, 7). The building set according to the invention comprises various duct spacers and various types of duct connecting members as well as mechanical coupling means for securing the duct spacers and the duct connecting members to each other and for securing the duct connecting members relative to the studs.

## Description

The invention relates to a method of providing an installation duct transversely to a plurality of structural parts which are arranged at mutual modular distances, and which are adapted to support covering plates that conceal the installation duct after the mounting.

The invention is preferably, but not exclusively intended for the building of an installation duct in a partition wall, which typically comprises a plurality of upright studs which form the basis for covering plates. In the event that wooden studs are used, it is well-known that holes have to be drilled or grooves have to be formed for receiving ducts or pipes, and in case of steel studs it is well-known that these comprise a plurality of small holes through which pipes or wires may be run, as long as the covering has not been mounted. It is also well-known that the studs are to be fixed at the top and at the bottom, so that they have well-defined positions relative to the wall plates that are to be mounted, in particular relative to the points where two wall plates adjoin each other. The known operations are thus relatively laborious in order for the result to be in order.

The specification of US 4,255,610 discloses an installation duct to be arranged externally on a wall, preferably a movable wall. This technique has the drawback that the ducts are thin-walled and resilient plastics parts where it is difficult to arrange switches and sockets such that these are fixed securely.

The object of the invention is to provide a method which enables a concealed installation to be made more quickly and gives a result, where the correcet measures are observed.

This object is achieved by arranging a duct connecting member on at least some of the structural parts, and defining the distance between the structural parts by inserting a duct spacer between the duct connecting members. This distance is typically a multiple of the gap spacing for the attachment of the covering plates to the structural parts.

Preferably, duct connecting members are arranged on adjacent structural parts, but it may also be for every third or fourth structural part, corresponding to the distance between two plate joints.

This allows an installation duct to be established, while facilitating the working operations in the orientation of the structural parts, as the duct spacers automatically define the distance between the structural parts.

As is the case with the previosuly mentioned prior art, the installation duct may be made of thin-walled plastics parts, which, according to the invention, are positioned behind the covering plates. When switches or sockets are to be mounted, these may be fixed relatively to the covering plates so as to provide a strong and stable assembly with a flush appearance.

Preferably, the structural parts are substantially upright studs, and in the event that only one duct is arranged e.g. in a partition wall slightly above floor, it is not necessary to secure the studs in the associated floor runner, since the duct members define the position of the stud until wall plates are mounted, which fix the studs when the plates have been mounted. An extra duct may also be arranged at the top of the partition wall, whereby the positions of the studs are completely defined on the basis of an end stud.

In case of a wooden stud, a groove or a hole may be formed for receiving a duct connecting member, and in case of a steel stud a hole may be cut/punched in the stud for receiving a duct connecting member. The hole is cut preferably close to a side of the stud which faces toward a covering plate, said side being capable of yielding slightly when the duct connecting member is inserted. Alternatively, a depression may be formed in the side of a steel stud for receiving a duct connecting member. The depression may be formed either at the building site or in connection with the manufacture of the steel stud. The manufacturing process may also comprise providing a duct connecting member which may be integrated with the stud such that it does not weaken the strength of the stud noticeably.

The invention has been explained above in terms of arranging a separate duct connecting member, which is then connected with a duct spacer on opposite sides of the stud. The invention also comprises the embodiment that a duct spacer may be integrated with a duct connecting member at one end or both ends.

To facilitate the identification of the position of the duct when the wall is covered with plates, the duct may be provided with electrically or magnetically detectable means, e.g. of the type which is known from the Danish Patent Applications 1318 and 1319 from 1997.

By marking externally on a covering plate where the duct is positioned before the plate is mounted, it is easy subsequently to drill the plate at the correct place.

In an embodiment, a multi-layered covering, preferably a two-layer covering, may be used, where the inner layer substantially has the same thickness as the depth of the installation duct. This means that the installation duct may be arranged directly externally on the studs, and that the inner layer of covering plates may be arranged on the studs and adjoin the installation duct. Then, the outer covering plate may be arranged and conceal the installation duct, which may then be drilled from the outside through the outer layer for the fixing of switches or sockets. The boxes or the frames for the these components will typically extend through the installation duct and into the cavity of the finished wall, when the depth of the boxes is greater than the total depth of the installation duct and a covering plate.

The invention also comprises a duct construction set for performing the method explained above.

The construction set is characterized in that it comprises duct connecting members which have means for securing the connecting members on a stud and has means for connecting the connecting members with duct spacers associated with the construction set, and comprises covering plates whose one dimension is a multiple of the centre length of the duct members, i.e. the effective length of a duct spacer and a duct connecting member.

In an embodiment, the depth of the duct connecting members, measured transversely to the stud, is reduced relative to the depth of the duct spacers. This has the advantage that the studs are weakened less because of the reduced depth of the connecting members, which is particularly relevant if the connecting member is milled or pressed into the side of a stud.

The construction set also comprises angular members and branch members, so as to allow an extended duct system to be built. Special members for internal and external corners may also be provided.

Although the studs normally observe mutual modular distances, it is expedient also to have telescopic spacers. For example at a door opening or at other places where the modular distances cannot be observed.

Moreover, it is an advantage when the duct members have electrically or magnetically detectable means of the type mentioned in the foregoing.

As mentioned before, the covering plates may be provided with a marking so that the duct may be found subsequently. To ensure that an installation duct always has a well-defined height above floor, it is expedient to provide the covering plates with a marking, e.g. a bar, at a predetermined distance from at least one edge which is determined for engaging the floor.

In an embodiment, the depths of the duct connecting members and the duct spacers are substantially equal to the thickness of a covering plate. It is hereby possible to make a concealed installation which does not extend within the outer sides of the studs. This ensures that the installation duct does not impede the insulation work, as insulation plates may unobstructedly be moved down between a pair of installation ducts which are positioned on their respective sides of the studs with a view to drilling the finished wall from both sides at a predetermined height.

Usually, a mounting frame or mounting box is used, which, after the drilling, is inserted through the wall and into the installation duct, following which the box is fixed relative to the wall. Such boxes are known per se, but require a certain mounting depth, and in the event that an installation duct which is not deep enough for the box is used, the set of the invention comprises a mounting box which can extend through the opposite walls of the duct, and which has holes in alignment with the duct cavity, so that the electrical wires may pass from the duct cavity and into the box for subsequent mounting on the electrical component. Depending on how many covering layers are used, and depending on their thickness, the holes may have to be arranged differently in the mounting box, which may therefore advantageously be provided with a plurality of scores at various depths, thereby allowing drilling to be performed precisely at the place where this is needed.

The duct members may be integrated with a duct connecting member at one end or both ends. This means in practice that one end of a spacer may be formed as a connecting member and have means for arranging the member in a stud, while the opposite end of the spacer may be adapted to cooperate with another connecting member.

According to the invention, the construction set also comprises a cutting tool for cutting/punching a hole in a steel stud, so that the hole precisely fits the duct connecting members, and so that the coupling means of the connecting members may cooperate with the steel stud. Preferably, the cutting tool has a spacer so that the holes may be cut in the steel stud at a predetermined height above floor where it is desired to arrange the duct.

Finally, the construction set according to the invention also comprises a pressing tool for impressing a depression in a steel stud for receiving a connecting member. The previosuly mentioned coupling means between the duct members and the studs may comprise incisions or bends, which are provided by means of the cutting and pressing tool according to the invention.

The invention will be explained more fully by the following description of some embodiments with reference to the drawing, in which
Fig. 1 shows a first embodiment of the invention,
Figs. 2-9 show various examples of duct connecting members associated with the set according to the invention,
Figs. 10-12 show examples of various connecting methods,
Figs. 13-14 show examples of a finished duct system,
Fig. 15 shows a telescopic embodiment of a duct member,
Fig. 16 shows another embodiment of the invention,
Fig. 17 shows a cutting tool for use in connection with the invention,
Fig. 18 shows a plate wall having a duct which is made in accordance with the invention, while
Fig. 19 shows still another embodiment of the invention.

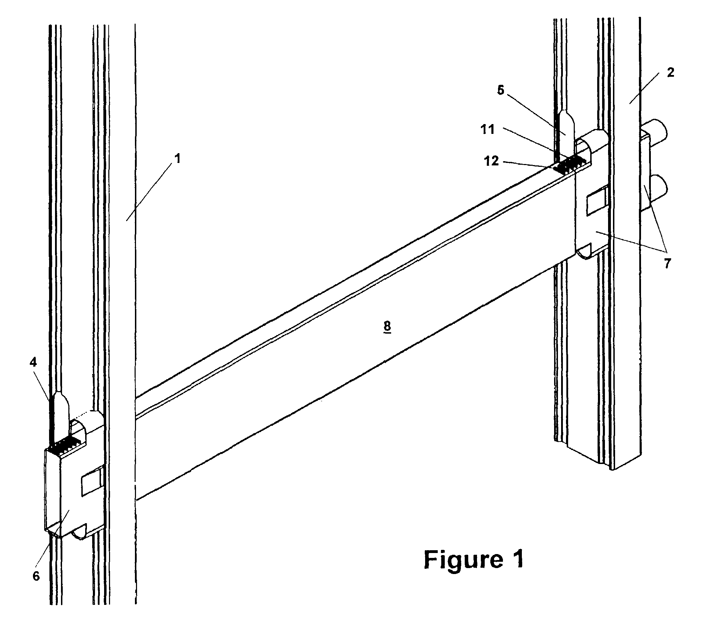

Fig. 1 shows a pair of vertical steel studs 1 and 2, which are normally supported at the bottom by a bottom runner (not shown). The studs are provided with holes 4 and 5 and opposite these holes with a further hole into which a duct connecting member 6 and 7, respective½ly, is inserted. A duct spacer 8 extends between the connecting members 6 and 7 and has such a length that the steel studs 1 and 2 have a predetermined mutual distance when the duct members have been assembled. It is observed that the holes in the studs have been cut close to the outer faces of the studs, which are intended for engagement with covering plates, which are secured later to the studs when the entire framework of studs and ducts has been mounted. The duct spacer 8 will hereby also adjoin the inner side of the covering plate, which is expedient for the subsequent drilling and mounting of electrical components. When the holes are arranged right out at the sides of the studs, it is moreover ensured that the stud can yield slightly when the duct connecting members are inserted.

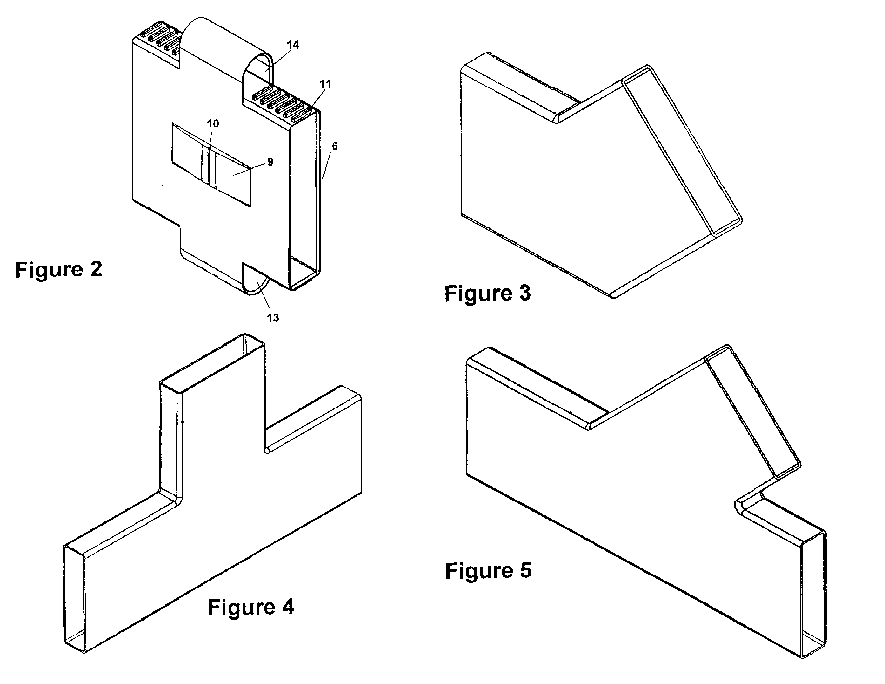

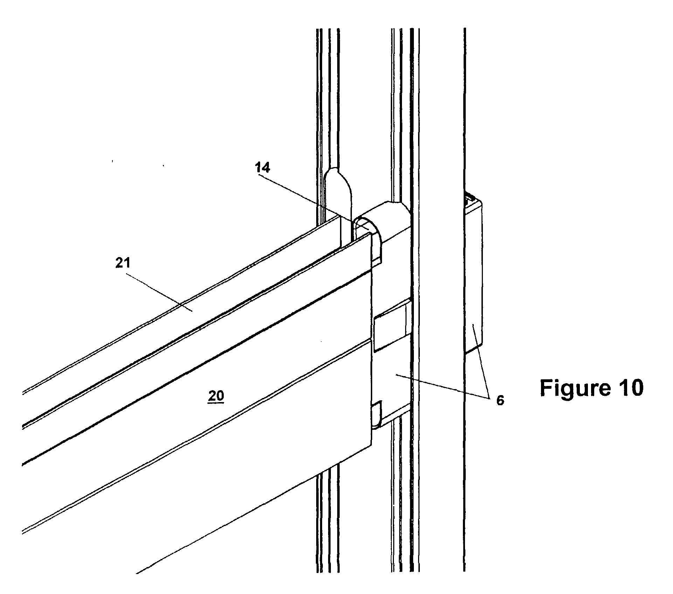

Fig. 2 shows the duct connecting member 6 from fig. 1, which is preferably made of plastics. Wedge-shaped projections 9 are provided on opposite sides of the duct connecting member, said projections having a groove 10 for receiving the edge of the holes in the studs. When the duct connecting member is inserted into a hole in the stud, the opposite plastics walls of the duct connecting member may yield, but it is also expedient that the stud can yield slightly as stated above, so that it is easy to insert the connecting member, which is securely fixed by the engagement of the stud with the grooves 10. The duct connecting member 6 moreover has ribs 11 which are adapted to cooperate with corresponding ribs 12 (see fig. 1) on the duct spacers. The duct connecting member 6 is hollow and has a pair of opposed tunnels 13, 14, whose function will appear from the following explanation of fig. 10. The wedge projections 9 and in particular the position of the groove 10 ensure that the duct connecting member has a predetermined position relative to the stud, and when a duct spacer is then pushed into position inwardly over the connecting members, the studs 1 and 2 in fig. 1 will have a predetermined fixed mutual distance. This is important for the vertical joints between the covering plates to be positioned exactly in the centre at a stud. Moreover, it is not necessary to fix the studs in the respective bottom runner, since the duct also ensures this.

In addition to a duct spacer like the one shown at 8 in fig. 1, there is also a plurality of other duct members which are associated with the construction set according to the invention. Figs. 3-6 show a bend, a T-member, a branch and an internal corner, respectively. Although it is not shown in figures 3-5, it will be appreciated that the ends of these duct members are provided with ribs, as explained before, or other coupling means for interconnection of the duct members - connecting members as well as spacers.

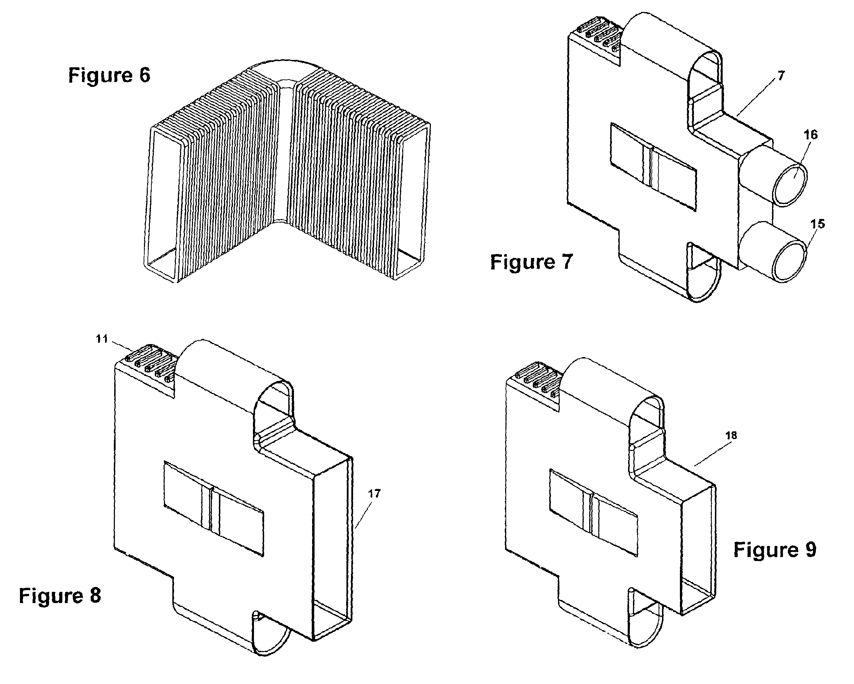

Fig. 7 shows details of a special connecting member 7, which is also shown in fig. 1. The connecting member 7 differs from the connecting member 6 shown in fig. 2 in that one end is modified to end in a pair of pipe connection pieces or bushings 15 and 16. This embodiment allows the duct to be continued via flexible pipes.

Fig. 8 shows a variant 17 of a duct connecting member which does not have ribs 11 at one end. Fig. 9 shows another variant of a duct connecting member, which allows the dimension of the duct spacers to be changed.

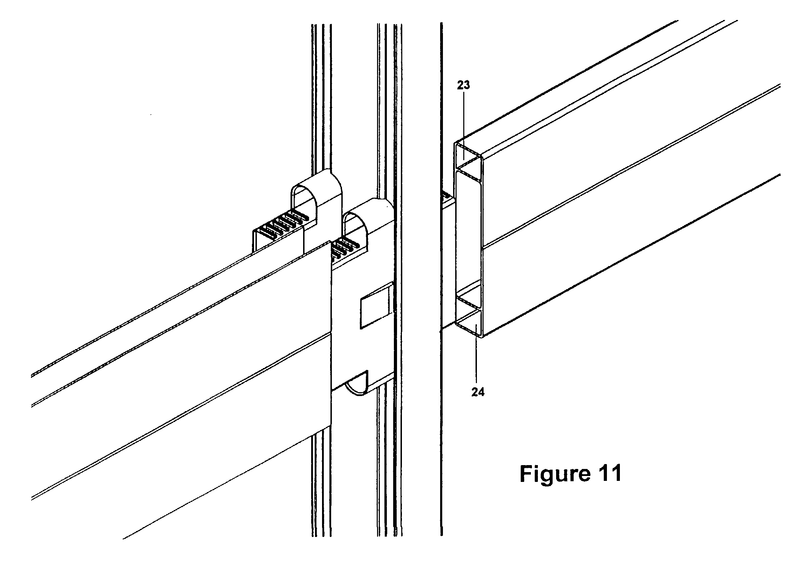

Fig. 10 shows a joint between a duct connecting member 6 and a duct spacer 20. The duct spacer 20 has an open channel 21 at the top and at the bottom e.g. for receiving weak current wires to keep these separated from power current wires in the duct itself. The weak current wires may extend through the tunnel 14. Fig. 11 shows a duct connecting member 22 with closed secondary ducts 23 and 24. Fig. 11 also shows two duct connecting members opposite each other. This is necessary if access is to be established from both sides of the finished wall, because it is desirable that e.g. the electrical equipment has a predetermined standard distance from floor.

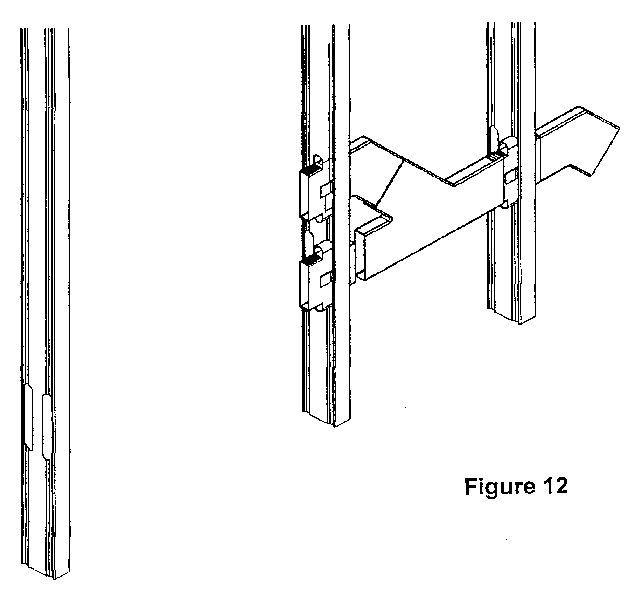

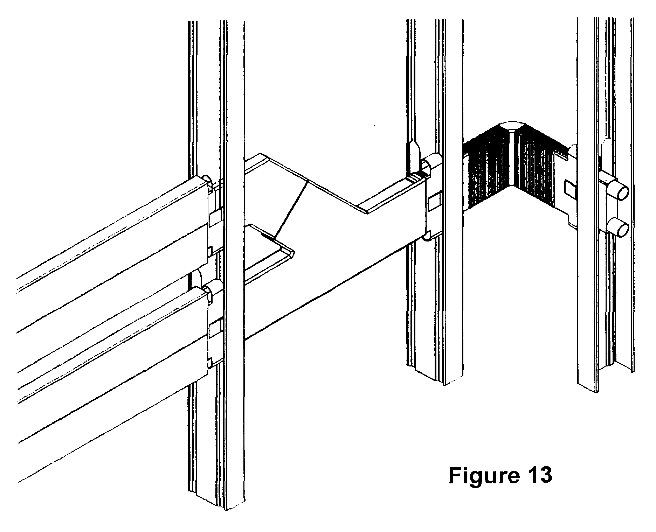

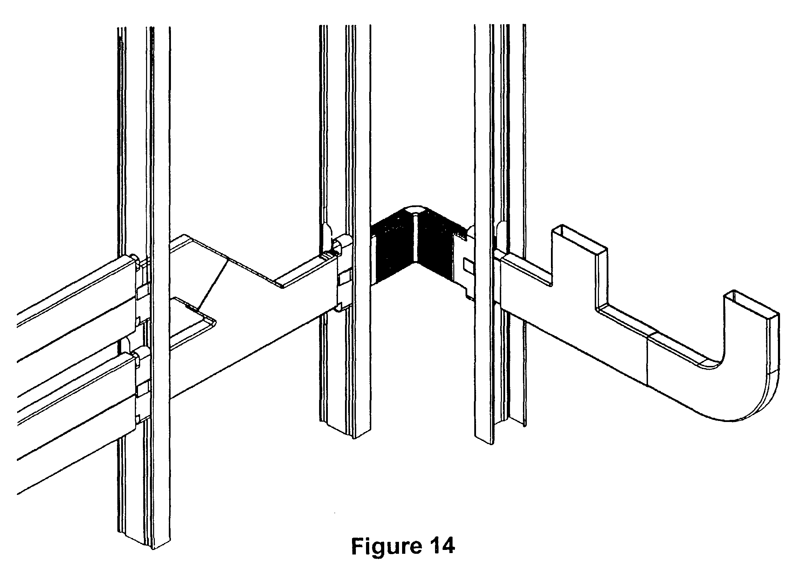

Figs. 12-14 show how various ducts may be built in a partition wall by means of the set according to the invention before the covering plates are mounted. The advantages of such an extended duct system is that the finished wall may be drilled from the outside through the duct wall so as to allow mounting of sockets, etc., which are connected electrically to cables or wires in the duct system.

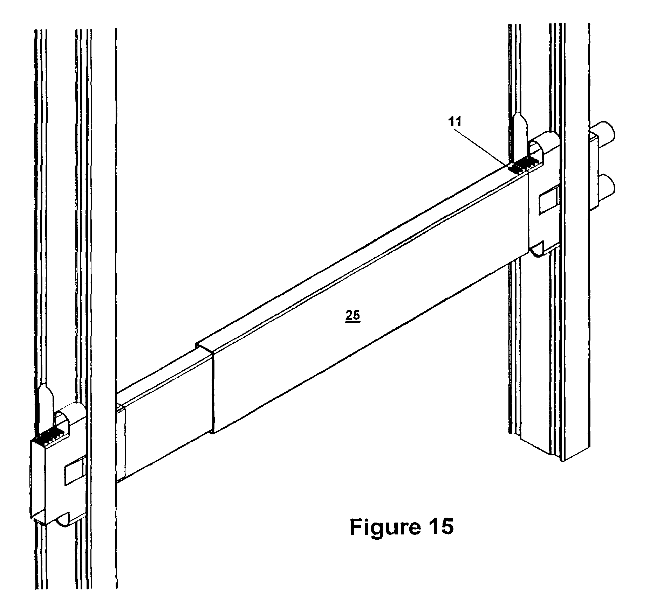

It is not always possible to maintain the specific modular distance between the studs. This is the case e.g. at door openings, windows or the like, and the duct building set according to the invention therefore also comprises a telescopic spacer, which is indicated at 25 in fig. 15. One end of this spacer has ribs 11, while the other end has slightly smaller dimensions and is adapted to cooperate with a spacer of the type which is shown at 17 in fig. 8.

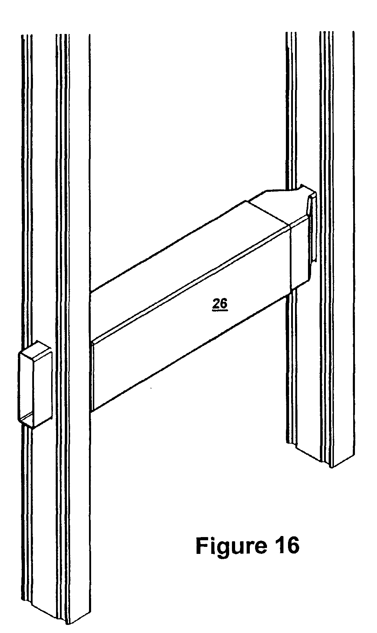

Fig. 16 shows a variant where a duct spacer 26 has a greater depth, measured transversely to the wall, than the depth of the duct connecting members. This variant is expedient in a relatively small wall where it is desired to have access to the duct from the opposed sides of the wall. It will also be appreciated that in case of quite special electrical equipment requiring additional depth, it is possible to use duct spacers where one or both opposite sides are pulled out relative to the sides of the duct connecting members.

It is well-known that a search spring or the like is used for running wires and cables through the duct system. To enable the search spring to pass, all duct members, where the internal diameters change, preferably have funnel-shaped internal walls. For example, the duct member shown in fig. 7 will have two internal funnels that lead from the rectangular aperture to the two circular apertures which are defined at the bushings 15 and 16.

With reference to fig. 1, the method of the invention will now be explained. Imagining that the stud 1 has already been arranged and held at a distance from a preceding stud by a spacer which is mounted on the connecting member 6, the duct spacer 8 is arranged on the connecting member 6 as shown in fig. 1. Then a connecting member 7 is mounted in the stud 2 before the stud is erected, and when the stud has been erected, the connecting member 7 is pushed together with the spacer 8 so that the connecting member is caused to bottom out in the spacer. This distance will be kept by the cooperating ribs 11 and 12. The stud 2 is hereby fixed at a predetermined distance from the stud 1. Hereby, it is not necessary to fix the stud at the bottom in the bottom runner, and if a duct is also arranged at the top in the wall, the studs need not be secured in the top runner either.

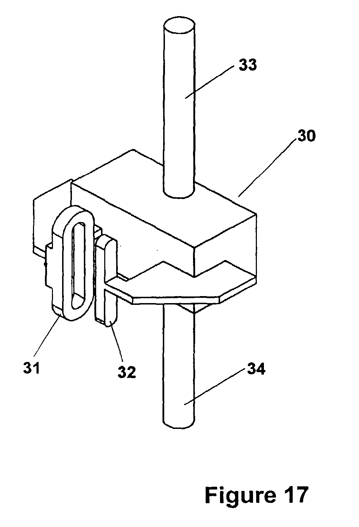

The steel studs may be supplied with holes 4 and 5 at predetermined places, but it is far from certain that they are positioned exactly as is desired in the finished wall. Therefore, it may be an advantage that the holes in the studs are established simultaneously with the erection of the studs, and for this purpose the construction set according to the invention comprises a cutting tool 30, which is shown in fig. 17. The cutting tool comprises cooperating cutting jaws 31 and 32, which may be activated manually or automatically, and there is moreover a handle 33 as well as an adjustable leg 34, which may be adjusted such that the jaws 31, 32 cut a hole in the stud at the proper height. The tool may be inverted so that what is designated 33 becomes the leg, and what is designated 34 becomes the handle, so that it is the jaw 32 that extends into the bottom of the "U" which corresponds to the cross-section of the stud, whereby the hole in the stud is as close as possible to the outer side of the stud.

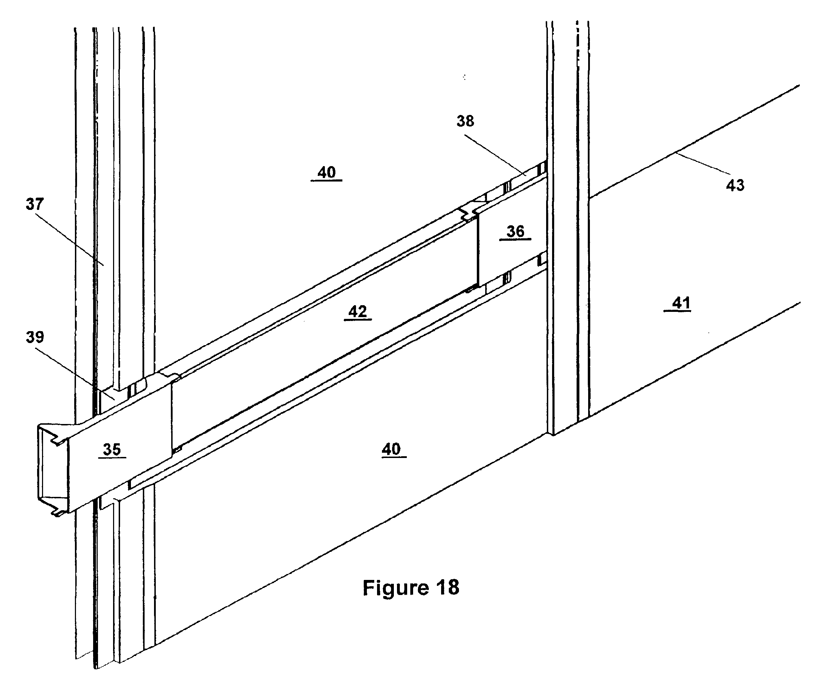

Fig. 18 shows a variant where the duct connecting member 35, 36 does not extend through a hole in the stud 37 and 38, respectively, there being provided a depression, shown at 39, in the side of the stud 37. The depressions may be made with various depths, but by using duct connecting members 35, 36, which also have a reduced depth at the stud, it may be ensured that the depression 39 in the steel stud need not be so deep and thereby does not weaken the stud very much. It will be appreciated that milled cuts in a wooden stud may just as well be involved. The depressions 39 in the studs may have been made beforehand in the manufacture of the stud, or may be made at the building site by means of a special pressing tool like the cutting tool shown in fig. 17. Fig. 18 also shows how covering plates are mounted, e.g. plaster plates on the studs 37 and 38. The structure shown comprises two layers of plates 40 and 41, where the depression depth in the stud 37 and the depth reduction in the duct connecting member 35 are dimensioned such that the external side of the duct is flush with the external side of the plate 40. When the outer plate 41 is mounted externally on the plate 40, its internal side engages the duct so that it is convenient to mount electrical installation equipment.

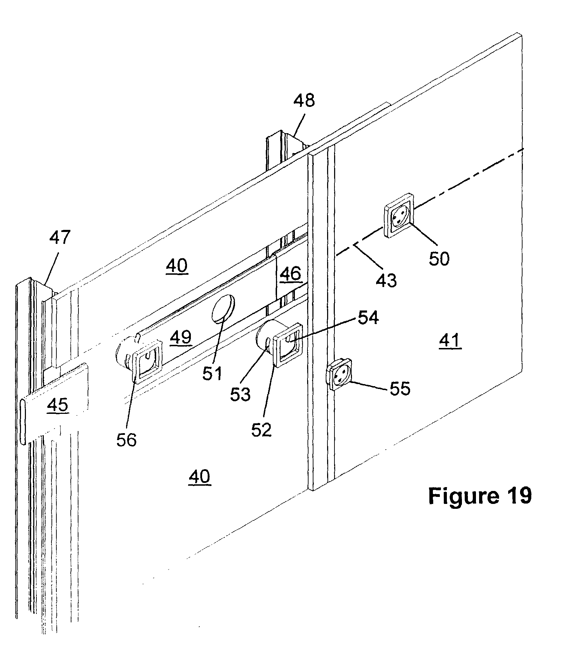

Fig. 19 shows a further embodiment, illustrating steel studs 47 and 48 having duct connecting members 45 and 46 arranged externally thereon, said members being interconnected by means of a duct spacer 49. In this embodiment, the thickness of the duct members 45, 46 and 49 is substantially equal to the thickness of the shown plate parts 40, which constitute the inner layer of a two-layer covering. In fig. 19, the plates 40 are shown at a certain distance from the duct for clarity, but in practice the plate parts 40 will adjoin the duct and be flush with it, so as to allow mounting of an external plate 41 which is hereby caused to be in plane engagement with both the plates 40 and said duct members. With this embodiment it is particularly easy to arrange insulation plates in the cavity of the wall, in particular when it is desired to have an installation duct on both sides of the wall at the same height.

Fig. 19 also shows a socket 50 which is flush-mounted in the external covering plate 41. This mount is shown in exploded view in fig. 19, which also shows a through hole 51 in the opposite side walls of the duct 49. A mounting box according to the invention is indicated at 52, said mounting box being receivable in the hole 51 and having openings 53 and 54, which are located at such a depth that the holes are flush with the duct cavity when the mounting box is arranged externally on the last layer of plates, which cover the plates 40 and the duct 49. This appears from fig. 19 at the shown box 56, where the holes are flush with the duct cavity, and where it may be seen that the box extends through the opposed walls of the duct and into the cavity of the wall. Then, the electrical component 55 may be arranged in the mounting box, with the connection wires from the concealed duct 49 extending through the holes 53, 54 so that they may be connected to the component 55.

It will be appreciated that according to the invention the duct connecting members 35, 36, 45 and 46, respectively, may be arranged on the respective studs, so that the shown duct spacer 42 and 49, respectively, maintains the predetermined modular distance between the studs 37, 38 or 47, 48, respectively. The attachment may take place in various ways, e.g. screws, quick couplings, etc.

To ensure that the duct is arranged at the proper height above floor, the invention comprises covering plates 41 having a marking 43 to which both the height of the cutting tool and optionally of the pressing tool may be set. This means that after the mounting of the plate 41 it is certain that the duct has a well-defined position relative to the marking or the bar 43.

## Claims

1. A method of providing an installation duct in a wall and transversely to a plurality of structural parts which are arranged at mutual modular distances, and which are adapted to support covering plates, **characterized by** arranging a duct connecting member on at least some of the structural parts, and defining the distance between these structural parts by inserting a duct spacer so that the covering plates may cover the installation duct.

2. A method according to claim 1, **characterized by** arranging duct connecting members on adjacent structural parts.

3. A method according to claim 1, **characterized by** using substantially upright studs as structural parts.

4. A method according to claim 3, **characterized by** arranging duct spacers and duct connecting members both at the top and at the bottom of the studs.

5. A method according to claim 3 or 4, wherein the stud is a wooden stud, **characterized by** making a groove or a hole in the wooden stud for receiving a duct connecting member.

6. A method according to claim 3 or 4, wherein the stud is a steel stud, **characterized by** cutting/punching a hole in the stud for receiving a duct connecting member.

7. A method according to claim 6, **characterized by** cutting/punching the hole close to a side of the stud which serves as a support for a covering plate.

8. A method according to claim 3 or 4, wherein the stud is a steel stud, **characterized by** pressing a depression in the side of the stud for receiving a duct connecting member.

9. A method according to claim 8, **characterized by** providing, at the same time as the depression, a duct connecting member integrated with the steel stud.

10. A method according to claims 1 - 8, **characterized by** integrating a duct connecting member with a duct spacer at one end or both ends of the duct spacer.

11. A method according to claims 1 - 10, **charactized** by providing the established duct with electrically or magnetically detectable means.

12. A method according to claims 5 - 9, **characterized by** providing the covering plates with an external marking of where the installation duct is located prior to the mounting of the plate.

13. A method according to claims 1 - 5, **characterized by** using a two-layer covering and duct members which are substantially flush with the external face of the internal covering layer after the mounting on said structural parts.

14. A method according to claim 13, **characterized in that** the depth of the duct members substantially corresponds to the thickness of the internal covering plate.

15. A construction set for performing the method according to claim 1, **characterized in that** it comprises duct connecting members which have means for securing the duct connecting members on structural parts as well as means for coupling the duct connecting members with the duct spacers, which are likewise associated with the construction set, and comprises covering plates whose one dimension is a multiple of the centre length of the duct connecting members.

16. A set according to claim 15, **characterized in that** the duct connecting members have a smaller depth than the depth of the duct spacers.

17. A set according to claim 15 or 16, **characterized in that** the set comprises angular duct members.

18. A set according to claims 15 - 17, **characterized in that** the set comprises duct branching members.

19. A set according to claims 15 - 18, **characterized in that** telescopic duct spacers are included.

20. A set according to claims 15 - 19, **characterized in that** the duct members have electrically or magnetically detectable means.

21. A set according to claim 15, **characterized in that** the covering plates are provided with a marking at a predetermined distance from at least one of the edges of the plate.

22. A set according to claim 15 or 17 - 21, **characterized in that** the duct spacers and the duct connecting members have substantially the same depth as the thickness of a covering plate.

23. A set according to claim 15, **characterized in that** it comprises a mounting box whose depth is so great that, in the mounted position, the box extends through holes in a pair of opposed walls of the duct.

24. A set according to claim 15, **characterized in that** it comprises a mounting box for receiving and fixing an electrical component, said box having holes at such a depth that, when the box is mounted, they are flush with the duct cavity.

25. A set according to claim 23, **characterized in that** the sides of the box have scores for providing connection holes to the duct cavity at a predetermined depth.

26. A set according to claims 15 - 24, **characterized in that** at least one end of a duct spacer is integrated with a duct connecting member.

27. A set according to claim 15, **characterized in that** the set comprises a cutting/punching tool.

28. A set according to claim 15, **characterized in that** the set comprises a pressing tool.
